# EUROPÄISCHE PATENTANMELDUNG

(11) **EP 1 168 750 A1**
(43) Veröffentlichungstag der Anmeldung: **02.01.2002**
(21) Anmeldenummer: 00113866.8
(22) Anmeldetag: 30.06.2000
(51) Int. Cl.: H04L 29/06

(54) **Verfahren zum anonymen Zusichern von Eigenschaften eines Benutzers in einem Computernetzwerk**

(71) Anmelder: Schnakenberg, Dieter, 50672 Köln (DE); Rohmann, Oliver, 45699 Herten (DE)
(72) Erfinder: Rohmann, Oliver, 45699 Herten (DE)
(74) Vertreter: Cohausz & Florack

(57) **Zusammenfassung**

Die Erfindung betrifft ein Verfahren zum anonymen Zusichern von Eigenschaften eines Benutzers in einem Computernetzwerk, daß es ermöglicht, einem Benutzer anzuzeigen, wer zu welcher Zeit und über welche seiner personenbezogenen Daten verfügt und einem Dritten, dem die Daten übermittelt worden sind, eine Prüfung der Daten zu vereinfachen bzw. zu ersparen. Es wird somit ein Verfahren zur informationellen Selbstbestimmung einerseits und eine einfache Verifikation der gewonnenen Daten andererseits zur Verfügung gestellt.

## Beschreibung

Die Erfindung betrifft ein Verfahren zum anonymen Zusichern von Eigenschaften eines Benutzers in einem Computernetzwerk sowie die dafür erforderlichen Verfahren für ein erstes Anmelden bei einer Kontrollinstanz sowie für ein Erzeugen und Hinterlegen von Chiffrepaaren. Weiterhin betrifft die Erfindung ein Verfahren zum Überprüfen der Richtigkeit eines verschlüsselten Chiffreelementes, ein Verfahren zum Erzeugen eines Chiffres sowie ein Verfahren zum symmetrischen Verschlüsseln und Entschlüsseln eines Datenfeldes eines Chiffreelementes. Schließlich betrifft die Erfindung ein EDV-System zur Verwirklichung der zuvor erwähnten Verfahren sowie ein Computer-Programm mit Programmbefehlen für ein EDV-System der zuvor genannten Art.

Im Stand der Technik, von der die vorliegende Erfindung ausgeht, sind auf dem Wege der elektronischen Kommunikation zwischen Sender und Empfänger einer Nachricht bzw. zwischen einem Benutzer und einem Dritten, zwei Zustände sehr einfach zu erreichen. Der erste Zustand ist die "absolute Anonymität", der zweite Zustand ist die "vollständige Identifikation" des Benutzers. Im Gegensatz zur direkten Kommunikation entziehen sich jedoch die Angaben, die durch die Kommunikationspartner zur Person des Benutzers gemacht werden, einer direkten Überprüfung. Wird zwischen den Kommunikationspartnern jedoch ein engeres Verhältnis angestrebt, sei es geschäftlicher oder privater Natur, spielt die Identifizierbarkeit der Person eine immer größere Rolle. Im Stand der Technik wird zu diesem Zweck, vor allem bei geschäftlichen Abläufen, eine große Menge personenbezogener Daten gesammelt. Die Anbieter von Waren und Dienstleistungen, wollen damit einen Missbrauch ihrer Dienste soweit wie möglich ausschließen. Das Sammeln personenbezogener Daten erzeugt jedoch eine Reihe von Problemen.
1. Die Datenübertragung und Speicherung muß sicher vor dem Zugriff Unbefugter sein.
2. Jede Information muß einzeln geprüft werden, da von einer Vertrauenswürdigkeit der Daten nicht ausgegangen werden kann.
3. Dieses Sammeln von Daten steht außerdem noch konträr zum Interesse des Benutzers an informationeller Selbstbestimmung.
4. Alle Vorschriften des Datenschutzes müssen beachtet werden.

Um diese Reihe von Problemen zu umgehen, bedient man sich im Stand der Technik verschiedener Hilfsmittel. Für das Problem 1 ist dieses die verschlüsselte Datenverbindung. Diese geht davon aus, das beiden Kommunikationspartner an sich vertrauenswürdig sind und ein Missbrauch der Daten nur durch Unbefugte erfolgt. Auf die weitere Verwendung der Daten hat der Benutzer bei diesem Verfahren keinen Einfluß.

Um auch die Probleme 2 und 3 zu umgehen, werden im Netz Dienste angeboten, welche die Rolle eines vertrauenswürdigen Vermittlers übernehmen. Dies hat zur Folge, das die persönlichen Daten nicht mehr bei allen Anbietern gesammelt, sondern treuhänderisch über den Vermittler abgewikkelt werden. Diese treuhänderische Verwaltung hat für den Dritten, bspw. einem Anbieter, zudem den Vorteil, daß die übergebenen Daten mit einer größeren Wahrscheinlichkeit korrekt sind.

Die Schwierigkeiten dieser Lösung liegen darin, daß der Vermittler von nun an über alle Transaktionen informiert ist und die persönlichen Daten eines jeden einzelnen Anwenders zur Verfügung hat, ohne daß der Benutzer einen direkten Einfluß auf die weitere Verwendung der Daten hätte.

Das Problem 4 entsteht direkt aus dieser Problematik. Wenn dem treuhänderischen Verwalter alle diese Daten tatsächlich zur Verfügung stehen, muß er einen sehr großen technischen Aufwand betreiben, um diese gemäß dem Datenschutzgesetz vor dem Zugriff unbefugter Dritter zu schützen.

Daher liegen der vorliegenden Erfindung die folgenden technischen Probleme zugrunde:
1. Das Sammeln personenbezogener Daten durch den Dritten muß auf ein Mindestmaß schrumpfen.
2. Die dem Dritten übermittelten Daten müssen vertrauenswürdig sein.
3. Der Benutzer muß zu jedem Zeitpunkt wissen, wer über welche seiner personenbezogenen Daten verfügt.
4. Die Daten des Benutzers können vom Dritten nicht ohne Wissen des Benutzers zu erneuten geschäftlichen Transaktionen benutzt werden.
5. Die eingeschaltete Kontrollinstanz darf den Inhalt der persönlichen Daten nicht kennen, muß aber in der Lage sein ihrer Richtigkeit zu bestätigen.

Die einzelnen technischen Probleme lassen sich dahingehend zusammenfassen, daß die Angaben einer tatsächlichen real existierenden Person auf dem Wege der elektronischen Kommunikation direkt überprüft werden können, wobei die Kontrollinstanz nichts über die eigentliche Transaktion erfährt und wobei der Benutzer die Anzahl der anzugebenen Informationen auf ein Mindestmaß beschränken kann.

Die zuvor aufgezeigten technischen Probleme werden gemäß einer ersten Lehre der vorliegenden Erfindung durch die Verfahren gemäß der Patentansprüche 1, 4 und 6 gelöst, wobei die Unteransprüche 1, 2, 5 und 7 weitere Ausgestaltungen dieser Verfahren angeben. Die Verfahren gemäß der Ansprüche 6 und 7 dienen einem anonymen Zusichern von Eigenschaften eines Benutzers in einem Computernetzwerk, wobei ein erstes Anmelden eines Benutzers bei einer Kontrollinstanz gemäß einem Verfahren nach einem der Ansprüche 1 bis 3 durchgeführt worden ist und wobei vom Client des Benutzers mindestens ein Chiffrepaar mit Hilfe eines Verfahrens nach Anspruch 4 oder 5 erzeugt worden ist.

Gemäß einer zweiten Lehre der vorliegenden Erfindung werden die oben aufgeführten technischen Probleme durch ein Verfahren zum anonymen Zusichern von Eigenschaften eines Benutzers in einem Computernetzwerk gemäß Anspruch 10 sowie durch ein Verfahren für ein erstes Anmelden bei einer Kontrollinstanz gemäß Anspruch 8 gelöst, wobei die Unteransprüche 9 und 11 weitere Ausgestaltungen der zweiten Lehre der Erfindung beschreiben.

Gemäß einer dritten Lehre der vorliegenden Erfindung werden die oben angeführten technischen Probleme durch ein Verfahren zum Überprüfen der Richtigkeit eines verschlüsselten Chiffreelementes nach Anspruch 12 durch ein Verfahren zum Erzeugen eines Chiffres gemäß Anspruch 14 sowie durch ein Verfahren zum symmetrischen Verschlüsseln eines Datenfeldes insbesondere für ein Verschlüsseln von zwei Chiffreelementen gemäß Anspruch 16 sowie durch ein Verfahren zum Entschlüsseln der verschlüsselten Datenfelder gemäß Anspruch 17 gelöst. Die Unteransprüche 13 und 15 beschreiben dabei weitere Ausgestaltungen der dritten Lehre der Erfindung.

Schließlich werden die genannten technischen Probleme auch durch ein EDV-System gemäß Anspruch 18 sowie durch ein Computer-Programm gemäß Anspruch 19 gelöst.

Die erfindungsgemäßen Verfahren stellen eine Möglichkeit dar, dem Benutzer klar zu zeigen wer, zu welcher Zeit und über welche seiner personenbezogenen Daten verfügt und dem Dritten eine Prüfung der übermittelten Daten zu vereinfachen, wenn nicht ganz zu ersparen. Es wird damit auf der einen Seite ein Werkzeug zur informationellen Selbstbestimmung und auf der anderen Seite eine einfache Möglichkeit der Verifikation der gewonnenen Daten zur Verfügung gestellt. Die wesentlichen Vorteile sind dabei folgende:
- Höchstmögliche Sicherheit der Übermittlung personenbezogener Daten.
- Keine Möglichkeit der rekursiven Ermittlung personenbezogener Daten durch Angriffe elektronischer oder andere Art.
- Sofortige Erkennbarkeit bei Missbrauch.
- Mögliche Übertragungsmöglichkeit auch über unsichere Kommunikationswege.
- Jeder im System ablaufende Vorgang bedarf einer doppelten Überprüfung, d. h. sowohl Server als auch der Client müssen eines Transaktion bestätigen.
- Der Server hat zu keiner Zeit Kenntnis vom Inhalt der Datenpakete.
- Jede Transaktion ist einzigartig.

Um diese Punkte zu realisieren, wird vorgeschlagen, ein spezielles Verschlüsselungsverfahren eingesetzt, das aus den persönlichen Daten stets unterschiedliche Schlüsselpaare erzeugt. Die Anzahl der möglichen Schlüsselpaare pro Datenfeld ist abhängig von der Feldlänge und dem verwendeten Alphabet. Die Stärke des Algorithmus besteht vor allem darin, das es zu jedem Chiffre eine unbegrenzte Anzahl von sinnvollen Entschlüsselungen gibt und sich selbst bei Kenntnis des Klartextes der zweite Chiffre sich nicht eindeutig aus dem ersten berechnen läßt.

Die erfindungsgemäßen Verfahren sind kein Ersatz für eine digitale Unterschrift, sondern basieren auf dem System der digitalen Unterschrift. Die Angaben, die ein eingetragener Benutzer macht, sind stets auf ihre Richtigkeit hin überprüfbar. Bei einem Missbrauch ist der Verursacher eines Schadens stets feststellbar. Ein Missbrauch ist für den Benutzer sofort erkennbar.

Im Gegensatz zum reinen System der digitalen Unterschrift offenbart der Benutzer nur die Informationen, die für die gewünschte Transaktion sinnvoll sind.

### Beispiele:

| | |
|---|---|
| Altersprüfung | nur Alter und UID werden bestätigt und verifiziert. |
| | |
| Telefonkontakt | nur Telefonnummer und UID werden bestätigt und verifiziert. |
| | |
| Auktionen | nur Existenz und UID werden bestätigt und verifiziert. |
| | |
| E-commerce | nur Existenz, UID und Lieferanschrift werden bestätigt und verifiziert. |

Ein wichtiger Vorteil ist dabei, daß für den Dritten die Prüfung der übermittelten Daten entfällt und der Benutzer nur den Datenteil offenbaren muß, der tatsächlich benötigt wird.

Zusätzlich kann jeder Benutzer abhängig von seiner Verifizierungs-Stufe eine quasi anonyme Online-Rechnungsanschrift erhalten, die Dienste wie Überweisungen, Schecks, Geldwechsel von elektronischen Währungen auf der Basis der doppelten Bestätigung möglich macht.

Die Verifizierungs-Stufe hängt dabei von der Vertrauenswürdigkeit der jeweiligen Authorisierungsinstanz ab.

Außerdem ist das System in der Lage, als Dienstleistung die Zugangskontrolle zu anderen Systemen zu übernehmen. Die geschieht auf demselben Weg wie die Zugangskontrolle zum Server selbst über ein Einmal-Passwort.

Die Erfindung wird im folgenden anhand von Ausführungsbeispielen im Detail erläutert, wozu auf die beigefügte Zeichnung Bezug genommen wird. In der Zeichnung zeigen
- Fig. 1: ein Ablaufdiagramm eines ersten erfindungsgemäßen Verfahrens für ein erstes Anmelden bei einer Kontrollinstanz zum anonymen Zusichern von Eigenschafteneines Benutzers in einem Computernetzwerk,
- Fig. 2: ein Ablaufdiagramm eines erfindungsgemäßen Verfahrens für ein Erzeugen und Hinterlegen von Chiffrepaaren (U,S) zum anonymen Zusichern von Eigenschafteneines Benutzers in einem Computernetzwerk,
- Fig. 3: ein Ablaufdiagramm eines ersten erfindungsgemäßen Verfahrens zum anonymen Zusichern von Eigenschafteneines Benutzers in einem Computernetzwerk,
- Fig. 4: ein Ablaufdiagramm eines zweiten erfindungsgemäßen Verfahrens für ein erstes Anmelden bei einer Kontrollinstanz zum anonymen Zusichern von Eigenschafteneines Benutzers in einem Computernetzwerk,
- Fig. 5: ein Ablaufdiagramm eines zweiten erfindungsgemäßen Verfahrens zum anonymen Zusichern von Eigenschafteneines Benutzers in einem Computernetzwerk,
- Fig. 6: ein Aufbaudiagramm eines Chiffres U und
- Fig. 7: ein Aufbaudiagramm eines Chiffres S.

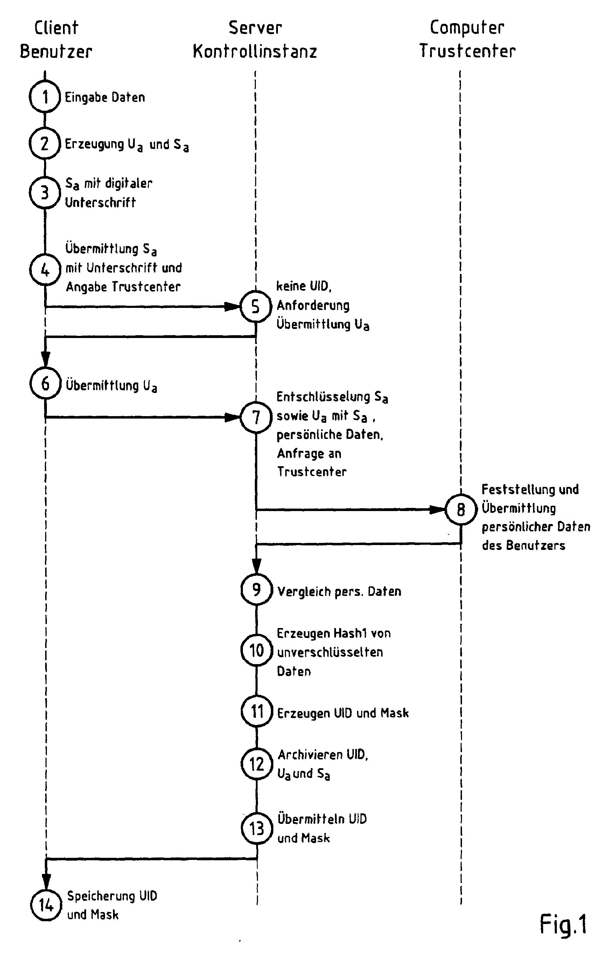

In Fig. 1 ist ein erstes Ausführungsbeispiel eines erfindungsgemäßen Verfahrens für ein erstes Anmelden bei einer Kontrollinstanz zum anonymen Zusichern von Eigenschaften eines Benutzers in einem Computernetzwerk, insbesondere dem Internet dargestellt. Bei dem dargestellten Flußdiagramm ist zu beachten, daß bis auf wenige Ausnahmen die miteinander kommunizierenden Computer ohne direkte Beeinflussung des Benutzers die Verfahrensschritte durchführen.

Fig. 1, Schritt 1: Zu Beginn werden vom Benutzer in einen Computer, der nachfolgend Client genannt wird, die persönlichen Daten eingegeben. Der Begriff Client wird deshalb gewählt, weil der Benutzer einen vom nachfolgend beschriebenen Zentralcomputer der Kontrollinstanz, dem Server, getrennten Computer für seine Eingaben nutzt. Diese Trennung zwischen Client und Server ist erforderlich, um eine Speicherung der persönlichen Daten in unverschlüsselter Form auf dem Server zu verhindern. Dieses trifft im nachfolgend beschriebenen Verfahren bis auf eine genau definierte Ausnahme zu.

Fig. 1, Schritt 2: Vom Client wird mit Hilfe der vom Benutzer eingegebenen persönlichen Daten ein Anmeldungs-Chiffrepaar Uₐ,Sₐ erzeugt, wobei die Anmeldungs-Chiffre Uₐ,Sₐ jeweils die persönlichen Daten in unterschiedlicher Verschlüsselung enthalten und die persönlichen Daten nur aus der Kombination beider Chiffre Uₐ,Sₐ ermittelt werden können. Ein konkretes Ausführungsbeispiel der Verschlüsselungsmethode wird weiter unten angegeben, jedoch ist jede Verschlüsselungsmethode abwendbar, die die beiden zuvor angegebenen Bedingungen erfüllt.

Fig. 1, Schritt 3: Vom Client wird der Anmeldungs-Chiffre Sₐ mit einer mittels eines privaten Schlüssels des Benutzers erzeugten digitalen Unterschrift verschlüsselt.

Dabei kann jedes Unterschriftsverfahren zum Erzeugen einer digitalen Unterschrift angewendet werden. Zum Erzeugen der digitalen Unterschrift wird vom Benutzer ein persönlicher Schlüssel (private key) verwendet, der nur ihn selbst bekannt ist. Zum Entschlüsseln der so verschlüsselten Daten kann dann ein öffentlicher Schlüssel verwendet werden. Es handelt sich also um eine asymmetrische Verschlüsselung. Um die Identität der mit dem öffentlichen und privaten Schlüssel gehörenden Person zu ermitteln, steht ein zentrales Trustcenter bereit. Bei diesem können bspw. die persönlichen Daten wie Name, Vorname und Adresse zu einer digitalen Unterschrift ermittelt werden. Die Identifizierung der Person ist somit mit hoher Zuverlässigkeit möglich.

Fig. 1, Schritt 4: Vom Client wird der Anmeldungs-Chiffre Sₐ mit der digitalen Unterschrift und die Angabe des der digitalen Unterschrift zugeordneten Trustcenters an den Server der Kontrollinstanz übermittelt.

Fig. 1, Schritt 5: Vom Server wird die Kontaktaufnahme durch einen Client ohne Übermittlung einer Benutzeridentifizierung UID erkannt und der Anmeldungs-Chiffre Uₐ wird vom Client angefordert.

Fig. 1, Schritt 6: Vom Client wird der Anmeldungs-Chiffre Uₐ an den Server der Kontrollinstanz übermittelt.

Fig. 1, Schritt 7: Zunächst wird vom Server der Anmeldungs-Chiffre Sₐ mit Hilfe des öffentlichen Schlüssels des Benutzers entschlüsselt. Danach wird der Anmeldungs-Chiffre Uₐ mit Hilfe des entschlüsselten Anmeldungs-Chiffres Sₐ entschlüsselt, woraus die persönlichen Daten des Benutzers ermittelt werden. Dieses stellt die oben erwähnte Ausnahme dar, daß der Server in Kenntnis über die Identität gesetzt wird.

Weiterhin werden vom Server zum Überprüfen der Identität des Benutzers bei einem Computer des Trustcenter die persönlichen Daten zu dem Benutzer angefordert. Denn das Trustcenter ist in der Lage, die digitale Unterschrift und den damit verbundenen öffentlichen Schlüssel mit den persönlichen Daten des Benutzers zu verbinden und die Identität des Benutzers festzustellen.

Fig. 1, Schritt 8: Vom Computer des Trustcenters werden die persönlichen Daten vom angeforderten Benutzer ermittelt und an den Server übermittelt .

Fig. 1, Schritt 9: Vom Server werden die aus dem Anmeldungs-Chiffre Uₐ ermittelten persönlichen Daten mit den vom Trustcenter übermittelten persönlichen Daten verglichen. Damit ist die Kontrollinstanz in der Lage zu verifizieren, ob die vom Benutzer für die Anmeldung übertragenen persönlichen Daten tatsächlich von der mit dem öffentlichen Schlüssel verbundenen Benutzer stammen.

Fig. 1, Schritt 10: Vom Server wird bei einer Übereinstimmung der persönlichen Daten mindestens ein Hashcode Hash1 von den entschlüsselten Daten erzeugt und abgespeichert. Der Hashcode Hash1 dient - wie weiter unten erläutert wird - einer Überprüfung der Richtigkeit von zukünftig an den Server übermittelten Chiffren S, ohne daß es jeweils einer Entschlüsselung der Chiffren S bedarf.

Fig. 1, Schritt 11: Vom Server wird eine Benutzeridentifizierung UID sowie eine Maskierung Mask erzeugt und abgespeichert. Die Benutzeridentifizierung UID dient einer leichten Identifizierung des Benutzers gegenüber dem Server. Die Maskierung Mask wird verwendet, um die verschlüsselten Daten der einzelnen Elemente der Chiffre U und S weniger angreifbar für einen Entschlüsselungsangriff zu machen. Dieses gilt insbesondere für Daten wie ein Geburtsdatum, die aufgrund ihrer Struktur bekanntermaßen leichter als andere Daten zu entschlüsseln sind.

Fig. 1, Schritt 12: Von der Kontrollinstanz werden die Anmeldungs-Chiffre Uₐ und Sₐ in Verbindung mit der Benutzeridentifizierung UID separat vom Server sicher archiviert. Dazu werden die Anmeldungs-Chiffre Uₐ, Sₐ auf separaten Speichermedien gespeichert, wobei die Speichermedien räumlich separat aufbewahrt werden und die Anmelde-Chiffren Uₐ, Sₐ auf dem Server gelöscht werden. Somit sind die persönlichen Daten nicht mehr auf einem mit einem Computernetzwerk verbundenen Teil des Servers abgespeichert, wodurch kein Ausspionieren über externe Datenleitungen möglich ist. Dadurch, daß zudem die Speichermedien separat aufbewahrt werden, können besondere Sicherheitsvorkehrungen getroffen werden, die einen Zugriff auf diese Daten nur unter genau definierten Umständen ermöglichen.

Fig. 1, Schritte 13 und 14: Vom Server werden die Benutzeridentifizierung UID und die Maskierung Mask an den Client übertragen, wo sie für eine spätere Verwendung gespeichert werden.

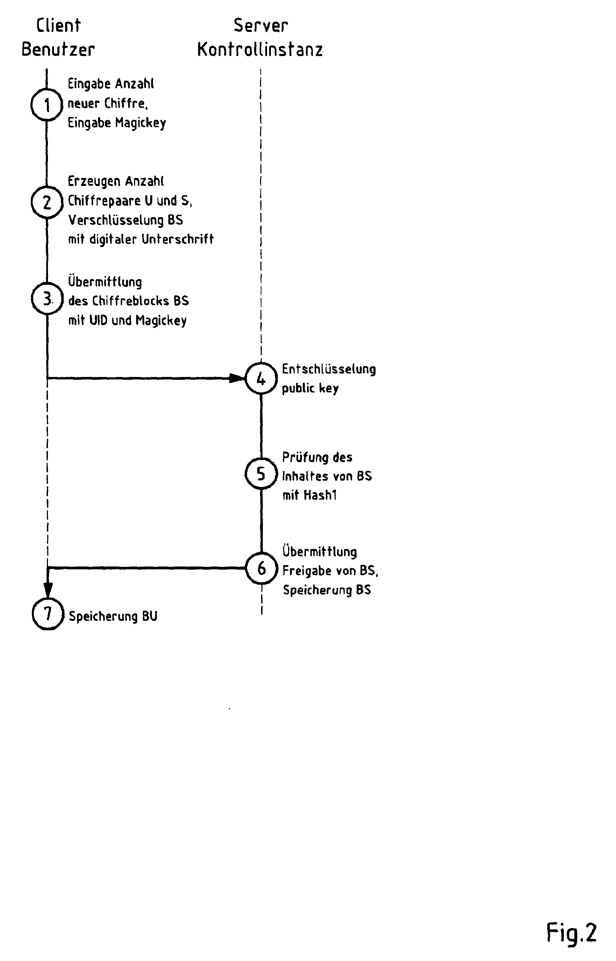

Fig. 2 zeigt ein Verfahren für ein Erzeugen und Hinterlegen von Chiffrepaaren U, S zum anonymen Zusichern von Eigenschaften eines Benutzers in einem Computernetzwerk, bei dem für ein erstes Anmelden eines Benutzers bei einer Kontrollinstanz eines der Verfahren gemäß Fig. 1 durchgeführt worden ist.

Fig. 2, Schritt 1: Vom Benutzer wird die Anzahl der neu zu erzeugenden Chiffrepaare U und S sowie ein Codewort (MagicKey) zur Bezeichnung der Anzahl von Chiffrepaaren U, S im Client eingegeben. Die Anzahl von Chiffren U, S kann auch als Schlüsselbund bezeichnet werden. Zur besseren Merkfähigkeit dient das Codewort (Magickey), so daß der Benutzer nicht einen vorgegebenen, sondern einen selbst gewählten Begriff benutzen kann, um die Chiffre des Schlüsselbundes zu bezeichnen.

Fig. 2, Schritt 2: Vom Client wird mit Hilfe der eingegebenen persönlichen Daten eine Anzahl von Chiffrepaaren U, S erzeugt, wobei die Chiffre U, S jeweils die persönlichen Daten in unterschiedlicher Verschlüsselung enthalten und die persönlichen Daten nur aus der Kombination beider Chiffre U, S ermittelt werden können und wobei die Anzahl von Chiffre U und S jeweils zu Chiffreblöcken BU und BS zusammengefaßt werden. Die Chiffreblöcke BU und BS lassen sich dann als separate Einheiten verwalten und behandeln, wie im folgenden dargelegt wird.

Weiterhin wird vom Client der Chiffreblock BS mit einer mittels eines privaten Schlüssels des Benutzers erzeugten digitalen Unterschrift versehen, der Chiffreblock wird also zusätzlich zu der in ihm steckenden Verschlüsselung nochmals verschlüsselt.

Fig. 2, Schritt 3: Vom Client werden der mit digitaler Unterschrift verschlüsselte Chiffreblock, das Codewort Magickey und die Benutzeridentifizierung UID an den Server für eine Überprüfung und Freigabe übermittelt.

Fig. 2, Schritt 4: Vom Server wird dann der Chiffreblock BS mit Hilfe des öffentlichen Schlüssels des Benutzers entschlüsselt. Dieses dient der Identifizierung des Benutzer beim Server, damit belegt werden kann, daß die übermittelte Chiffreblock BS tatsächlich vom zugeordneten Benutzer stammt. Bei diesem Vorgang kann der Server nur feststellen, von welchem Benutzer der Chiffreblock BS übermittelt worden ist. Jedoch können vom Server nur über die separat abgespeicherten und abgelegten und somit nicht ständig verfügbaren Anmeldechiffre Uₐ und Sₐ die persönlichen Daten selbst ermittelt werden. Denn den verschlüsselten Inhalt der Elemente der Chiffre S des Chiffreblockes BS kann der Server nicht ohne Kenntnis der Chiffre des Chiffreblockes U entschlüsseln.

Fig. 2, Schritt 5: Vom Server werden die Anzahl der Chiffre S des entschlüsselten Chiffreblocks BS mit Hilfe des Hashcodes Hash1 überprüft, wobei ein weiter unten beschriebenes Verfahren angewendet wird. Den Hashcode Hash1 wurde bei der Anmeldung erzeugt und beim Server für diese Überprüfung hinterlegt.

Fig. 2, Schritt 6: Vom Server werden nach erfolgreicher Überprüfung der Chiffre S des Chiffreblockes BS die Anzahl der Chiffre U und S freigegeben und diese Freigabe wird an den Client übermittelt. Zusätzlich werden die Chiffre des Chiffreblockes BS zusammen mit dem Codewort Magickey im Server für eine weitere Verwendung gespeichert.

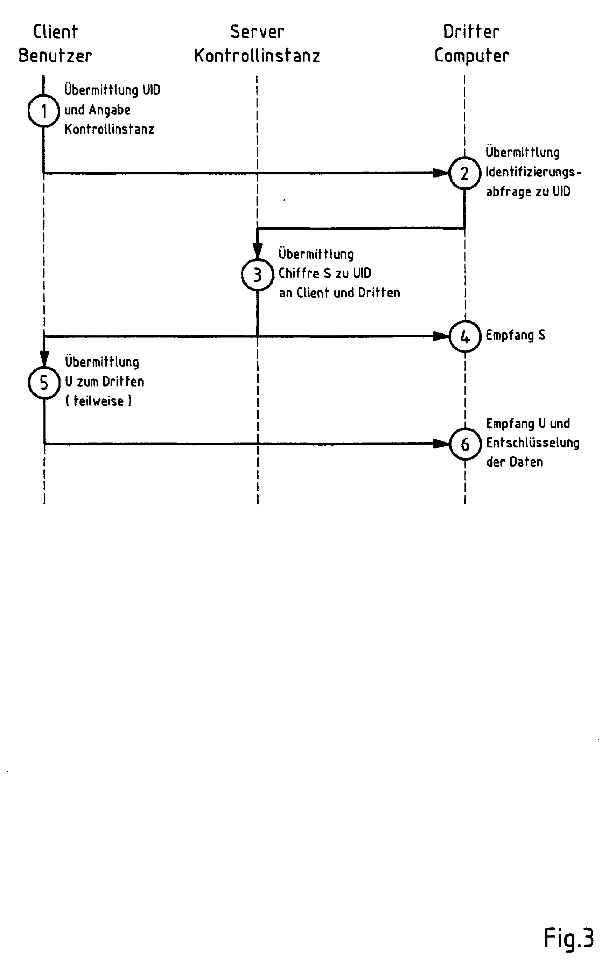

Fig. 3 stellt ein erstes Ausführungsbeispiel eines erfindungsgemäßen Verfahrens zum anonymen Zusichern von Eigenschaften eines Benutzers in einem Computernetzwerk dar, bei dem für ein erstes Anmelden eines Benutzers bei einer Kontrollinstanz ein Verfahren gemäß Fig. 1 durchgeführt worden ist und bei dem vom Client des Benutzers mindestens ein Chiffrepaar U, S mit einem Verfahren gemäß Fig. 2 erzeugt worden ist.

Fig. 3, Schritt 1: Vom Client wird die Benutzeridentifizierung UID (und die Angabe der Kontrollinstanz - die Kontrollinstanz ist systemimmanent und wird daher nicht mitübertragen) an einen Computer eines Dritten übermittelt. Damit wird der Computer des Dritten in die Lage versetzt, die Identifizierung des Benutzers über den Server der Kontrollinstanz zu überprüfen.

Fig. 3, Schritt 2: Vom Computer des Dritten wird die Benutzeridentifizierung UID für eine Identifizierungsanfrage an den Server der Kontrollinstanz übermittelt.

Fig. 3, Schritt 3: Vom Server wird der Client über die Identifizierungsanfrage des Computers des Dritten informiert und ein auf dem Server hinterlegter Chiffre S wird sowohl an den Client als auch den Computer des Dritten übermittelt. Dieses ist die einzige Beteiligung des Servers an dem Vorgang, der zwischen dem Client und dem Computer des Dritten abläuft. Daher kann prinzipiell vom Server nur festgestellt werden, daß, aber nicht welches Geschäft oder welcher Vorgang abläuft. Dieses dient der Anonymität des Benutzers. Der Server gewährleistet nur, daß der Schlüssel S zu der Benutzeridentifizierung gehört und überprüft und freigegeben ist.

Fig. 3, Schritt 4: Der Computer des Dritten empfängt den Chiffre S, speichert ihn zwischen und wartet auf den Empfang des Chiffre U vom Client.

Fig. 3, Schritt 5: Vom Client wird anschließend der dem Chiffre S zugeordnete Chiffre U an den Computer des Dritten übermittelt, um seine Identifizierung durch den Computer des Dritten zu ermöglichen. Dabei hat der Benutzer insbesondere die Möglichkeit, vor einem Übermitteln des Chiffre U an den Computer des Dritten festzulegen, welche der Mehrzahl von in den Chiffren S und U verschlüsselten Elementen bzw. Informationen vom Computer des Dritten entschlüsselt werden sollen und welche nicht. So kann bspw. der Benutzer für ein Kaufgeschäft festlegen, daß der Name und die Adresse entschlüsselt werden kann, nicht dagegen weitere persönliche Daten wie Geburtstagsdatum oder Telefonverbindung. Bei einer Internetumfrage kann dagegen der Benutzer festlegen, daß nur sein Geschlecht und sein Geburtsdatum entschlüsselt werden kann, nicht dagegen sein Name.

Fig. 3, Schritt 6: Vom Computer des Dritten wird der Chiffre U mit Hilfe des Chiffre S entschlüsselt und die Informationen werden aus dem Chiffre U abgeleitet, die vom Benutzer freigegeben worden sind. Dem Dritten liegen somit die Daten des Benutzers vor, die für den gewünschten Vorgang benötigt werden. Da die Daten von der Kontrollinstanz auf ihre Richtigkeit überprüft worden sind, kann sich der Dritte auf diese Daten weitgehend verlassen.

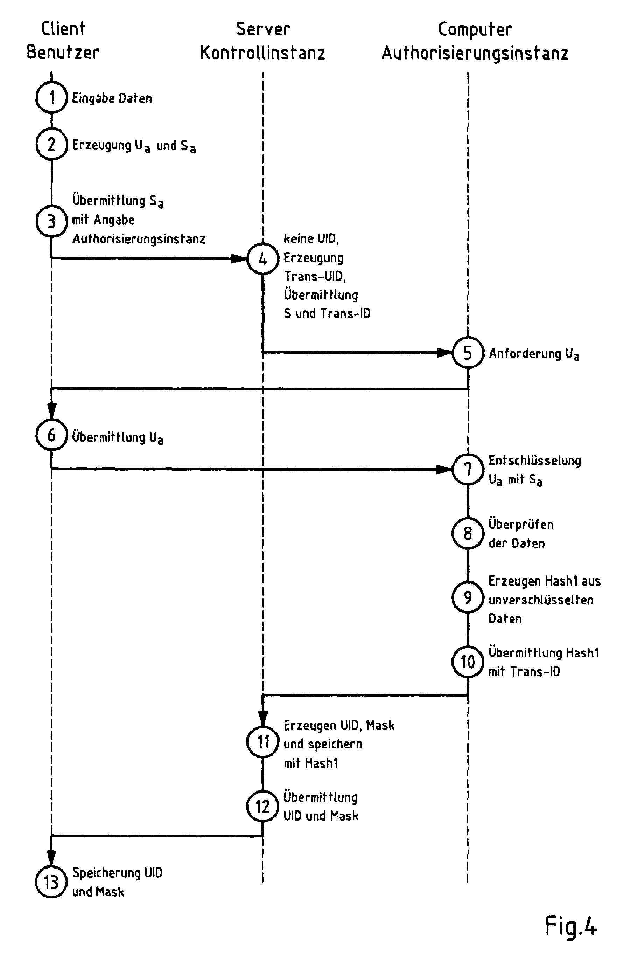

In Fig. 4 ist ein zweites erfindungsgemäßes Ausführungsbeispiel eines Verfahrens für ein erstes Anmelden bei einer Kontrollinstanz zum anonymen Zusichern von Eigenschaften eines Benutzers in einem Computernetzwerk, insbesondere dem Internet dargestellt. Bei dem dargestellten Flußdiagramm ist zu beachten, daß bis auf wenige Ausnahmen die miteinander kommunizierenden Computer ohne direkte Beeinflussung des Benutzers die Verfahrensschritte durchführen.

Dieses Verfahren unterscheidet sich vom in Fig. 1 dargestellten Verfahren dadurch, daß der Server zu keinem Zeitpunkt die persönlichen Daten des Benutzers in unverschlüsselter Form erhält oder selber in der Lage ist, die persönlichen Daten des Benutzers zu entschlüsseln. Eines vollständige Anonymität ist dadurch gewährleistet.

Fig. 4, Schritt 1: Zu Beginn werden vom Benutzer in einen Computer, der nachfolgend Client genannt wird, die persönlichen Daten eingegeben. Der Begriff Client wird deshalb gewählt, weil der Benutzer einen vom nachfolgend beschriebenen Zentralcomputer der Kontrollinstanz, dem Server, getrennten Computer für seine Eingaben nutzt. Diese Trennung zwischen Client und Server ist erforderlich, um eine Speicherung der persönlichen Daten auf dem Server zu verhindern. Obwohl der Server zu keinem Zeitpunkt Daten zur Identität des Benutzers erhält, kann er trotzdem - wie dargelegt wird - eine Kontrollfunktion über die Richtigkeit der bei den nachfolgend beschriebenen Vorgängen verwendeten Chiffren erfüllen.

Fig. 4, Schritt 2: Vom Client wird mit Hilfe der vom Benutzer eingegebenen persönlichen Daten ein Anmeldungs-Chiffrepaar Uₐ,Sₐ erzeugt, wobei die Anmeldungs-Chiffre Uₐ,Sₐ jeweils die persönlichen Daten in unterschiedlicher Verschlüsselung enthalten und die persönlichen Daten nur aus der Kombination beider Chiffre Uₐ,Sₐ ermittelt werden können. Ein konkretes Ausführungsbeispiel der Verschlüsselungsmethode wird weiter unten angegeben, jedoch ist jede Verschlüsselungsmethode abwendbar, die die beiden zuvor angegebenen Bedingungen erfüllt.

Fig. 4, Schritt 3: Vom Client wird der Anmeldungs-Chiffre Sₐ mit der Angabe einer Authorisierungsinstanz an einen Computer der Kontrollinstanz, im folgenden Server genannt, übermittelt. Dabei kann als Authorisierungsinstanz ein beliebiger Dienstleister auftreten, der einen Zugang zu seinem Computer ermöglicht. Dieses können bspw. eine Bank, ein Telekommunikationsanbieter oder eine Versicherung sein. Wesentlich ist, daß die Authorisierungsinstanz persönliche Daten gespeichert hat, deren Richtigkeit von der Authorisierungsinstanz bis zu einem gewissen Grad an Zuverlässigkeit garantiert werden kann.

Fig. 4, Schritt 4: Vom Server werden für ein Überprüfen der Identität des Benutzers der Anmeldungs-Chiffre Sₐ und eine Transfer-Benutzeridentifizierung Trans-ID an einen Computer der Authorisierungsinstanz übermittelt. Der Server ist somit nur im Besitz eines Chiffre Sₐ, der an sich nicht ohne Kenntnis des zugehörigen Chiffre Uₐ entschlüsselt werden kann.

Fig. 4, Schritt 5: Vom Computer der Authorisierungsinstanz wird der Anmeldungs-Chiffre Uₐ vom Client angefordert.

Fig. 4, Schritt 6: Vom Client wird dann der Anmeldungs-Chiffre Uₐ an den Computer der Authorisierungsinstanz übermittelt.

Fig. 4, Schritt 7: Vom Computer der Authorisierungsinstanz wird anschließend der Anmeldungs-Chiffre Uₐ durch den Anmeldungs-Chiffre Sₐ entschlüsselt. Erst jetzt werden die persönlichen Daten außerhalb des Client erfaßt, jedoch findet die Entschlüsselung nicht auf dem Server statt.

Fig. 4, Schritt 8: Vom Computer der Authorisierungsinstanz werden die so entschlüsselten persönlichen Daten mit bei der Authorisierungsinstanz abgespeicherten Daten verglichen, wie bereits oben ausgeführt worden ist.

Fig. 4, Schritt 9: Vom Computer der Authorisierungsinstanz wird bei einem Übereinstimmen der Daten mindestens ein Hashcode Hash1 von den entschlüsselten Daten erzeugt. Der Hashcode Hash1 dient - wie weiter unten erläutert wird - einer Überprüfung der Richtigkeit von zukünftig an den Server übermittelten Chiffren S, ohne daß es jeweils einer Entschlüsselung der Chiffren S bedarf.

Fig. 4, Schritt 10: Vom Computer der Authorisierungsinstanz wird der Hashcode Hash1 zusammen mit der Transfer-Benutzeridentifizierung Trans-ID an den Server übermittelt. Dadurch wird der Server in die Lage versetzt, anhand des Hashcodes Hash1 zukünftig übermittelte Chiffre S zu identifizieren und zu überprüfen, ohne daß ein Chiffre U für ein Entschlüsseln der Chiffre U und S vorliegen muß.

Fig. 4, Schritt 11: Vom Server wird der mindestens eine Hashcode Hash1 zusammen mit einer neu erzeugten Maskierung Mask und einer neu erzeugten Benutzeridentifizierung UID abgespeichert.

Fig. 4, Schritte 12 und 13: Vom Server wird die Benutzeridentifizierung UID zusammen mit der Maskierung Mask an den Client übertragen und dort abgespeichert.

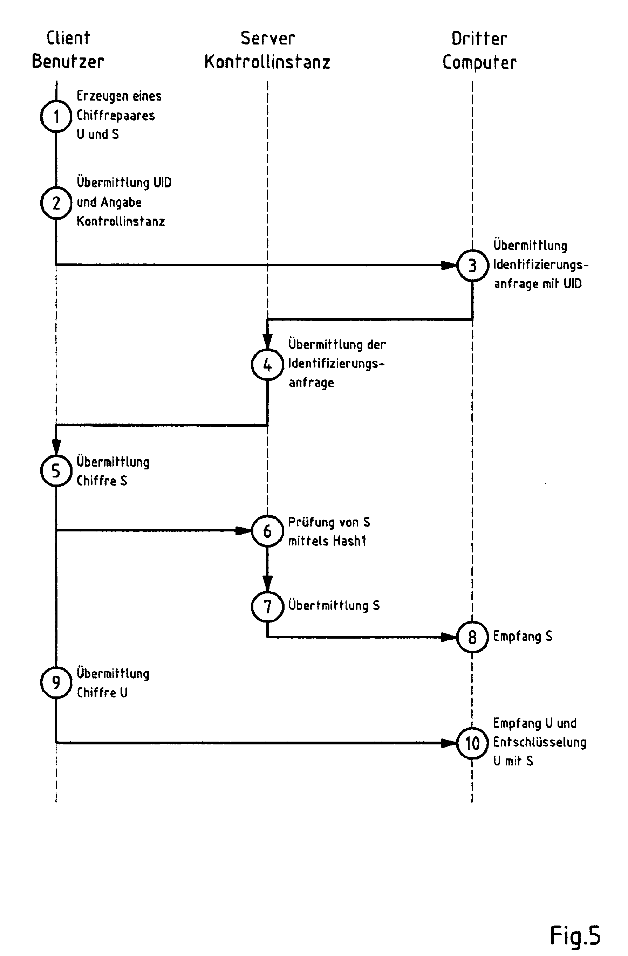

Fig. 5 stellt ein zweites Ausführungsbeispiel eines erfindungsgemäßen Verfahrens zum anonymen Zusichern von Eigenschaften eines Benutzers in einem Computernetzwerk dar, bei dem für ein erstes Anmelden eines Benutzers bei einer Kontrollinstanz eines der Verfahren gemäß Fig. 4 durchgeführt worden ist.

Fig. 5, Schritt 1: Vom Client des Benutzers wird mindestens ein Chiffrepaar U, S erzeugt oder ein bereits zu einem früheren Zeitpunkt erzeugtes Chiffrepaar U, S wird geladen. Die Chiffre U, S enthalten jeweils die persönlichen Daten in unterschiedlicher Verschlüsselung und die persönlichen Daten können nur aus der Kombination beider Chiffre U, S ermittelt werden.

Fig. 5, Schritt 2: Vom Client werden die Benutzeridentifizierung UID und die Angabe der Kontrollinstanz an einen Computer eines Dritten übermittelt.

Fig. 5, Schritt 3: Vom Computer des Dritten wird für eine Identifizierungsanfrage die Benutzeridentifizierung UID an den Server der Kontrollinstanz übermittelt.

Fig. 5, Schritt 4: Vom Server wird dann der Client über die Identifizierungsanfrage des Computers des Dritten informiert.

Fig. 5, Schritt 5: Vom Client wird der Chiffre S an den Server übermittelt.

Fig. 5, Schritt 6: Vom Server wird anschließend der Chiffre S mit Hilfe des abgespeicherten Hashcodes Hash1 überprüft. Dabei wird gewährleistet, daß der Server nicht die im Chiffre S enthaltenen Daten entschlüsseln kann, da dazu der Chiffre U erforderlich ist. Der Benutzer bleibt also weiterhin gegenüber dem Server anonym.

Fig. 5, Schritte 7 und 8: Vom Server wird nach erfolgreicher Überprüfung der Chiffre S an den Computer des Dritten übermittelt und dort zwischengespeichert.

Fig. 5, Schritt 9: Vom Client wird parallel zum Schritt 5 der dem Chiffre S zugeordnete Chiffre U an den Computer des Dritten übermittelt. Dadurch wird der Computer des Dritten in die Lage versetzt, die Identität des Benutzers zu ermitteln.

Fig. 5, Schritt 10: Vom Computer des Dritten wird der Chiffre U empfangen und mit Hilfe des Chiffre S entschlüsselt. Die persönlichen Daten werden dabei aus dem Chiffre U abgeleitet. Die Identität des Benutzers ist somit, anonym durch die Kontrollinstanz überprüft, beim Dritten festgestellt worden.

Vorzugsweise kann bei dem zuvor erläuterten Verfahren vom Benutzer vor einem Übermitteln des Chiffre U an den Computer des Dritten festgelegt werden, welche der Mehrzahl von in den Chiffren S und U verschlüsselten Informationen vom Computer des Dritten entschlüsselt werden sollen. Dadurch wird sichergestellt, daß der Dritte nur die für den betreffenden Vorgang notwendigen Daten erhält und daß nicht erforderliche Daten dagegen verborgen bleiben. Dieses dient dem Interesse des Benutzers am Datenschutz seiner persönlichen Daten.

Bei den zuvor beschriebenen Verfahren ist mehrfach erwähnt worden, daß die Richtigkeit eines verschlüsselten Chiffreelementes Sᵢ, Uᵢ überprüft werden kann, ohne daß es einer Entschlüsselung bedarf.

Dazu wird weiter erfindungsgemäß das folgende Verfahren vorgeschlagen. Vom Client des Benutzers und vom Server der Kontrollinstanz wird ein aus den unverschlüsselten Daten erzeugter und ggf. abgespeicherter eindeutiger erster Hashcode Hash1 verwendet.

Ein zweiter Hashcode Hash2 wird dann aus den verschlüsselten Daten und dem ersten Hashcode Hash1 erzeugt. Anschließend wird das Chiffreelement Sᵢ, Uᵢ mit den verschlüsselten Daten und dem separaten zweiten Hashcode Hash2 erzeugt.

Zum Überprüfen der Richtigkeit der verschlüsselten Daten des Chiffreelements Uᵢ, Sᵢ wird der zweite Hashcode Hash2 aus den übermittelten verschlüsselten Daten und dem abgespeicherten bekannten ersten Hashcode Hash1 ermittelt und mit dem übermittelten zweiten Hashcode Hash2 verglichen.

Bei einer Übereinstimmung des übermittelten Hashcodes Hash2 und dem aus den übermittelten verschlüsselten Daten erzeugten gleichen Hashcode Hash2 kann die Richtigkeit der verschlüsselten Daten festgestellt werden, ohne daß der Inhalt des Chiffreelements Uᵢ, Sᵢ entschlüsselt werden muß.

In bevorzugter Weise wird beim Erzeugen des zweiten Hashcode Hash2 ein Maskierungscode Mask, der oben bereits erwähnt worden ist, und/oder eine unverschlüsselte Angabe eines Attributes einbezogen. Durch die Verwendung des Maskierungscodes Mask wird ein Entschlüsselungsangriff durch Unbefugte erschwert.

Die mathematische Erzeugungsfunktion der Hashwerte läßt sich wie folgt darstellen:
Hash1 = SHA1 (Attribute, Data(original), Mask)
Hash2 = SHA1 (Hash1, Atribute, Data(encoded), Mask)

Dabei ist die Funktion SHA1 der aus dem Stand der Technik bekannte security hash algorithm Version 1. Statt der Funktion SHA1 können auch andere Hashfunktionen der zuvor beschriebene Art angewendet werden.

Daraus wird ersichtlich, daß sowohl der Client als auch der Server in der Lage sind, den Hashwert Hash2 zu berechnen, da nicht die Originaldaten, sondern nur die verschlüsselten Daten erforderlich sind. Die Originaldaten sind jeweils nur für das Erzeugen des Hashwertes Hash1 erforderlich, dieser Wert liegt dem Server aber in abgespeicherter Form vor.

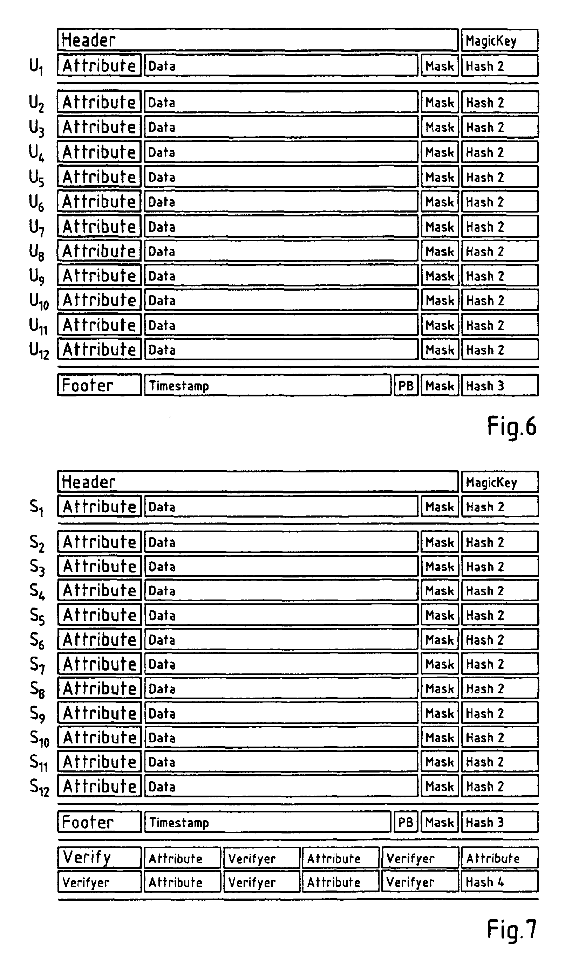

Die Fig. 6 bzw. 7 zeigen den gruppenweisen Aufbau der in den bisher beschriebenen verwendeten Chiffre U bzw. S. Im folgenden wird erläutert, wie das Verfahren zum Erzeugen eines Chiffres U oder S abläuft, wobei als Eingangsvoraussetzung ein erster aus den unverschlüsselten Daten erzeugter und abgespeicherter Hashcode (Hash1) vorgegeben ist.

Es wird eine Kopfzeile erzeugt, in der neben einer Überschrift Header das Codewort Magickey eingefügt ist, das der Benutzer für das Erzeugen einer Mehrzahl von Chiffrepaaren eingeben kann. Das Codewort ermöglicht ein leichteres Ansprechen der Mehrzahl von Chiffren eines sog. Schlüsselbundes.

Weiterhin wird mindestens ein Chiffreelement Uᵢ bzw. Sᵢ, i=1..n, n≥1, hier n=12, aus einer unverschlüsselten Angabe eines Attributes, den verschlüsselten Daten des zum Attribute gehörenden Datenfeldes Data, einem Maskierungscode Mask und einem zweiten Hashcode Hash2 erzeugt. Dabei entsprechen die Datenfelder Data den verschlüsselten Datenfelder Data (encoded) und der zweite Hashcode Hash2 wird aus den verschlüsselten Daten mindestens eines Datenfeldes Data (encoded) und dem ersten Hashcode Hash1 erzeugt, wie zuvor beschrieben worden ist.

Schließlich wird eine Fußzeile mit einem den Zeitpunkt der Erzeugung des Chiffre U oder S charakterisierenden Datenfeld Timestamp, einem Paritybit PB zur Identifizierung des Chiffretyps U, S, dem Maskierungscode Mask und einem dritten Hashcode Hash3 erzeugt. Das Paritybit PB wird so gewählt, daß die Parität des gesamten Chiffre U bzw. S einen bestimmten Wert annimmt, bspw. für die Chiffre U jeweils 0 und für die Chiffre S jeweils 1. Dieses dient der eindeutigen Chiffretypen U und S. Weiterhin wird der dritte Hashcode Hash3 aus den ersten Hashcodes Hash1 der einzelnen Chiffreelementen Uᵢ und Sᵢ, i=1..n, und aus dem Datenfeld Timestamp erzeugt nach der Funktion
- Hash3 =: SHA1(Hash1(S₁), .., Hash1(Sₙ),
Hash1(U₁), .., Hash1(Uₙ),
Timestamp)

Das zuvor beschriebene Verfahren zum Erzeugen eines Chiffre wird für beide Typen U und S gleichermaßen angewendet. Dem Chiffre S werden jedoch noch weitere Datenfelder der folgenden Art hinzugefügt.

Für mindestens ein Chiffreelement Sᵢ wird ein die Zuverlässigkeit der im Chiffreelement Sᵢ enthaltenen Daten charakterisierendes Verifizierungselement erzeugt. Dazu enthält jedes Verifizierungselement das zugehörige Attribute sowie die Angabe der jeweiligen Authorisierungsinstanz, aus der sich die Zuverlässigkeit der Überprüfung der im zugehörigen Datenfeld enthaltenen Information entnehmen läßt.

Im folgenden wird am Beispiel eines Datenfeldes a="Hallo" die bevorzugte Art des Verschlüsselns und Entschlüsselns der Datenfelder dargestellt, wie sie für die zuvor aufgezeigten Verfahren verwendet werden können. Dabei entsprechen das Datenfeld a den originalen unverschlüsselten Daten Data (original) und die Datenfelder b₁ und b₂ den verschlüsseltn Datenfeldern Data (encoded).
1. Zunächst wird die Feldlänge L des Datenfeldes a bestimmt, die vorliegend gleich 5 ist.
2. Eine Reihe von Pseudo-Zufallszahlen Zⱼ wird erzeugt, für die gilt:
a) ganze Zahlen von 1 bis N=510,
b) keine doppelten Vorkommen und
c) die Anzahl entspricht der Feldlänge L mit j=1..L.

3. Die Erzeugungsreihenfolge der Pseudo-Zufallszahlen Zⱼ in der Reihe wird als Attribut der Pseudo-Zufallszahl Zⱼ hinzugefügt und die Reihe R₁: {Z₁,1}, {Z₂,2}, ..., {Z_{L},L} wird erzeugt zu:
- R₁:: {39,1}, {26,2}, {228,3}, {32,4}, {189,5}}

4. Die Reihe R₁ wird nach der Größe der Pseudo-Zufallszahlen Zⱼ sortiert und die Reihe R₂ erzeugt:
- R₂:: {26,2},{32,4},{39,1},{189,5},{228,3}

5. In der Reihe R₂ werden die einzelnen Zeichen bzw. Buchstaben des zu kodierenden Datenfeldes a hinzugefügt.
{26,2,H},{32,4,a},{39,1,1},{189,5,1},{228,3,0}
Die Buchstaben werden als ihr ASCII-Wert dargestellt, wobei Leerstellen = null gesetzt werden. Es ergibt sich die Reihe R₃: {Zⱼ,j,a_{k,j}} mit
- R₃:: {26,2,72},{32,4,97},{39,1,108},{189,5,108},{220,3,111}}

6. Die Zeichenwerte werden durch die ihnen nun zugeordneten Pseudo-Zufallszahlen nach folgender Regel verändert.
a) a_{k,j}(1) = a_{k,j} + Zⱼ/2 und
   a_{k,j}(2) = a_{k,j} - Zⱼ/2
   mit Zⱼ gerade und k beliebig,
b) a_{k,j}(1) = a_{k,j} + Zⱼ/2 + 0,5 und
   a_{k,j}(2) = a_{k,j} - Zⱼ/2 + 0,5
   mit bei Zⱼ ungerade und k gerade,
c) a_{k,j}(1) = a_{k,j} + Zⱼ/2 - 0,5 und
   a_{k,j}(2) = a_{k,j} - Zⱼ/2 - 0,5
   mit bei Zⱼ ungerade und k ungerade,
d) wenn a_{k,j}(1) > 255, dann a_{k,j}(1) = a_{k,j}(1) - 256 und
e) wenn a_{k,j}(2) < 0, dann a_{k,j}(2) = a_{k,j}(2) + 256.

Durch die Addition bzw. Subtraktion der Zahl 255 wird sichergestellt, daß der Wert von a_{j,k} mit einem Byte dargestellt werden kann.
Daraus ergibt sich für das vorliegende Beispiel des Datenfeldes a="Hallo":

| | | |
|---|---|---|
| k=1 | {Z_{j,}j,a_{1,j}} = {26,2,72} | |
| | a_{1,j}(1) = 72+(26/2) = | 85 |
| | a_{1,j}(2) = 72-(26/2)= | 59 (Regel a) |
| | | |
| k=2 | {Zⱼ,j,a_{2,j}} = {32,4,97} | |
| | a_{2,j}(1) = 97+(32/2)= | 113 |
| | a_{2,j}(2) = 97-(32/2)= | 81 (Regel a) |
| | | |
| k=3 | {Zⱼ,j,a_{2,j}} = {39,1,108} | |
| | a_{3,j}(1) = 108+(39/2-0,5)= | 127 |
| | a_{3,j}(2) = 108-(39/2+0,5)= | 88 (Regel c) |
| | | |
| k=4 | {Zⱼ,j,_{2,j}} = {189,5,108} | |
| | a_{4,j}(1) = 108+(189/2+0,5)= | 203 |
| | a_{4,j}(2) = 108-(189/2-0,5)= | 14 (Regel b) |
| | | |
| k=5 | {Zⱼ,j,a_{2,j}} = {228,3,111} | |
| | a_{5,j}(1) = 111+(228/2)= | 225 |
| | a_{5,j}(2) = 111-(228/2)+256= | 253 (Regel e) |

7. Abschließend wird die alte Reihenfolge j=1..L der ursprünglichen Reihe R₁ Pseudo-Zufallszahlen Zⱼ wiederhergestellt und die verschlüsselten Datenfelder b₁ und b₂ ermittelt zu:
b₁ = {127,85,225,113,203}
b₂ = {88,59,253,81,14}

Bei Feldlängen L > 255 Zeichen, kann statt der 1 Byte-Basis, eine 2 Byte-Basis verwendet werden. Dies ermöglicht eine Verschlüsselung bis zu einer Feldlänge von 65025 Zeichen.
Das Entschlüsseln erfolgt dann in analoger Weise in umgekehrter Reihenfolge:
8. Aus den Zeichenwerten a_{k,j}(1) und a_{k,j}(2) der verschlüsselten Datenfelder
b₁ = (a_{k,1}(1), a_{k,2}(1), ..., a_{k,L}(1)) und
b₂ = (a_{k,1}(2), a_{k,2}(2), ..., a_{k,L}(2))
werden die Differenzen D_{k,j} berechnet zu
D_{k,j} = a_{k,j}(1) - a_{k,j}(2).

9. Dann, wenn D_{k,j} ≤ 0 gilt, wird D_{k,j} = D_{k,j} + 256 berechnet. Dieses ergibt:

| j | 1 | 2 | 3 | 4 | 5 |
|---|---|---|---|---|---|
| a_{k,1}(1) | 127 | 85 | 225 | 113 | 203 |
| a_{k,1}(2) | 88 | 59 | 253 | 81 | 14 |
| D_{k,j} | 39 | 26 | 228 | 32 | 189 |

10. Sortieren nach der Größe der Differenzen D_{k,j} führt zu der Reihenfolge k=1..L der Zeichen im unverschlüsselten Datenfeld a:

| k | 1 | 2 | 3 | 4 | 5 |
|---|---|---|---|---|---|
| a_{k,1}(1) | 85 | 113 | 127 | 203 | 225 |
| a_{k,1}(2) | 59 | 81 | 88 | 14 | 253 |
| D_{k,j} | 26 | 32 | 39 | 189 | 228 |

11. Aus den berechneten Differenzen Dⱼ werden die Zeichenwerte (a_{k,j}) nach den folgenden Regeln berechnet:
a) a_{k,j} = a_{k,j}(1) + D_{k,j}/2
mit D_{k,j} gerade,
b) a_{k,j} = a_{k,j}(1) + D_{k,j}/2 - 0,5
mit D_{k,j} ungerade und k gerade,
c) a_{k,j} = a_{k,j}(1) + D_{k,j}/2 + 0,5
mit D_{k,j} ungerade und k ungerade,
Daraus ergeben sich die folgenden Zeichenwerte:

| | | |
|---|---|---|
| k=1 | a_{k,j} = 85 - 13 = | 72 (Regel a) |
| k=2 | a_{k,j} = 113 - 16 = | 97 (Regel a) |
| k=3 | a_{k,j} = 127 - 19,5 + 0,5 = | 108 (Regel b) |
| k=4 | a_{k,j} = 203 - 94,5 - 0,5 = | 108 (Regel c) |
| k=5 | a_{k,j} = 225 - 114 = | 111 (Regel a) |

12. Den berechneten Zeichenwerten a_{k,j} werden entsprechend des verwendeten ASCII-Codes die Zeichen ermittelt, die die entschlüsselten Daten des Datenfeldes a darstellen. Daraus ergibt sich:

| a: | 72 | 97 | 108 | 108 | 111 |
|---|---|---|---|---|---|
| in Buchstaben | H | a | l | l | o |

Somit wird deutlich, daß aus dem Zusammenfügen der beiden verschlüsselten Datenfelder b₁ und b₂ die darin enthaltenen Informationen abgeleitet werden können. Ein verschlüsseltes Datenfeld allein reicht dagegen nicht aus, um den Inhalt zu bestimmen. Da beide verschlüsselten Datenfelder b₁ und b₂ mit dem gleichen Schlüssel der Reihe der Pseudo-Zufallszahlen Zⱼ erzeugt worden sind, kann das dargestellte Verschlüsselungsverfahren als symmetrisch bezeichnet werden.

## Patentansprüche

1. Verfahren für ein erstes Anmelden bei einer Kontrollinstanz zum anonymen Zusichern von Eigenschaften eines Benutzers in einem Computernetzwerk,
- bei dem vom Benutzer in einen Computer (Client) die persönlichen Daten eingegeben werden,
- bei dem vom Client mit Hilfe der vom Benutzer eingegebenen persönlichen Daten ein Anmeldungs-Chiffrepaar (Uₐ,Sₐ) erzeugt wird, wobei die Anmeldungs-Chiffre (Uₐ,Sₐ) jeweils die persönlichen Daten in unterschiedlicher Verschlüsselung enthalten und die persönlichen Daten nur aus der Kombination beider Chiffre (Uₐ,Sₐ) ermittelt werden können,
- bei dem der Anmeldungs-Chiffre (Sₐ) mit einer mittels eines privaten Schlüssels des Benutzers erzeugten digitalen Unterschrift und die Angabe des der digitalen Unterschrift zugeordneten Trustcenters an einen Computer der Kontrollinstanz (Server) übermittelt wird,
- bei dem vom Server der Anmeldungs-Chiffre (Uₐ) vom Client angefordert wird,
- bei dem vom Client der Anmeldungs-Chiffre (Uₐ) an den Server übermittelt wird,
- bei dem vom Server der Anmeldungs-Chiffre (Sₐ) mit Hilfe des öffentlichen Schlüssels des Benutzers entschlüsselt wird,
- bei dem vom Server der Anmeldungs-Chiffre (Uₐ) mit Hilfe des entschlüsselten Anmeldungs-Chiffres (Sₐ) entschlüsselt wird und daraus die persönlichen Daten des Benutzers ermittelt werden,
- bei dem vom Server zum Überprüfen der Identität des Benutzers bei einem Computer des Trustcenter die persönlichen Daten zu dem Benutzer angefordert werden,
- bei dem vom Computer des Trustcenters die Daten von dem angeforderten Benutzer an den Server übermittelt werden,
- bei dem vom Server die aus dem Anmeldungs-Chiffre (Uₐ) ermittelten persönlichen Daten mit den vom Trustcenter übermittelten persönlichen Daten verglichen werden,
- bei dem vom Server bei einer Übereinstimmung der Daten mindestens ein Hashcode (Hash1) von den entschlüsselten Daten erzeugt und abgespeichert wird,
- bei dem vom Server eine Benutzeridentifizierung (UID) erzeugt und abgespeichert wird
- bei dem von der Kontrollinstanz die Anmeldungs-Chiffre (Uₐ) und (Sₐ) in Verbindung mit der Benutzeridentifizierung (UID) separat vom Server sicher archiviert werden, und
- bei dem vom Server die Benutzeridentifizierung (UID) an den Benutzer übertragen wird.

2. Verfahren nach Anspruch 1,
bei dem vom Server die Anmeldungs-Chiffre (Uₐ,Sₐ) zur sicheren Archivierung auf separaten Speichermedien gespeichert, die Speichermedien räumlich separat aufbewahrt werden und die Anmelde-Chiffren (Uₐ,Sₐ) auf dem Server gelöscht werden.

3. Verfahren nach Anspruch 1 oder 2,
bei dem vom Server mit der Benutzeridentifizierung (UID) ein Maskierungscode (Mask) erzeugt, abgespeichert und an den Client übermittelt wird.

4. Verfahren für ein Erzeugen und Hinterlegen von Chiffrepaaren (U,S) zum anonymen Zusichern von Eigenschaften eines Benutzers in einem Computernetzwerk,
- bei dem für ein erstes Anmelden eines Benutzers bei einer Kontrollinstanz eines der Verfahren nach einem der Ansprüche 1 bis 3 durchgeführt worden ist,
- bei dem vom Client des Benutzers mit Hilfe der eingegebenen persönlichen Daten eine Anzahl von Chiffrepaaren (U,S) erzeugt wird, wobei die Chiffre (U,S) jeweils die persönlichen Daten in unterschiedlicher Verschlüsselung enthalten und die persönlichen Daten nur aus der Kombination beider Chiffre (U,S) ermittelt werden können und wobei die Anzahl von Chiffre (U) und (S) jeweils zu Chiffreblöcken (BU) und (BS) zusammengefaßt werden,
- bei dem vom Client der Chiffreblock (BS) mit einer mittels eines privaten Schlüssels des Benutzers erzeugten digitalen Unterschrift und die Benutzeridentifizierung (UID) an den Server übermittelt wird,
- bei dem vom Server der Chiffreblock (BS) mit Hilfe des öffentlichen Schlüssels des Benutzers entschlüsselt wird,
- bei dem vom Server die Anzahl der Chiffre (S) des entschlüsselten Chiffreblocks (BS) mit Hilfe des Hashcodes (Hash1) überprüft wird und
- bei dem vom Server nach erfolgreicher Überprüfung der Chiffre (S) die Anzahl der Chiffre (U) und (S) freigegeben werden und die Freigabe an den Client übermittelt wird.

5. Verfahren nach Anspruch 4,
bei dem vom Benutzer ein Codewort (MagicKey) zur Bezeichnung der Anzahl von Chiffrepaaren (U,S) angegeben wird und bei dem in jedem Chiffre (U,S) das Codewort gespeichert wird.

6. Verfahren zum anonymen Zusichern von Eigenschaften eines Benutzers in einem Computernetzwerk,
- bei dem für ein erstes Anmelden eines Benutzers bei einer Kontrollinstanz ein Verfahren nach einem der Ansprüche 1 bis 3 durchgeführt worden ist,
- bei dem vom Client des Benutzers mindestens ein Chiffrepaar (U,S) mit einem Verfahren nach Anspruch 4 oder 5 erzeugt worden ist,
- bei dem vom Client die Benutzeridentifizierung (UID) und die Angabe der Kontrollinstanz an einen Computer eines Dritten übermittelt werden,
- bei dem vom Computer des Dritten die Benutzeridentifizierung (UID) für eine Identifizierungsanfrage an den Server der Kontrollinstanz übermittelt wird,
- bei dem vom Server der Client über die Identifizierungsanfrage des Computers des Dritten informiert wird und ein auf dem Server hinterlegter Chiffre (S) an den Client und den Computer des Dritten übermittelt wird,
- bei dem vom Client der dem Chiffre (S) zugeordnete Chiffre (U) an den Computer des Dritten übermittelt wird und
- bei dem vom Computer des Dritten der Chiffre (U) mit Hilfe des Chiffre (S) entschlüsselt wird und die Informationen aus dem Chiffre (U) abgeleitet werden.

7. Verfahren nach Anspruch 6,
bei dem vom Benutzer vor einem Übermitteln des Chiffre (U) an den Computer des Dritten festgelegt wird, welche der Mehrzahl von in den Chiffren (S) und (U) verschlüsselten Informationen vom Computer des Dritten entschlüsselt werden sollen.

8. Verfahren für ein erstes Anmelden bei einer Kontrollinstanz zum anonymen Zusichern von Eigenschaften eines Benutzers in einem Computernetzwerk,
- bei dem vom Benutzer in einen Computer (Client) die persönlichen Daten eingegeben werden,
- bei dem vom Client mit Hilfe der vom Benutzer eingegebenen persönlichen Daten ein Anmeldungs-Chiffrepaar (Uₐ,Sₐ) erzeugt wird, wobei die Anmeldungs-Chiffre (Uₐ,Sₐ) jeweils die persönlichen Daten in unterschiedlicher Verschlüsselung enthalten und die persönlichen Daten nur aus der Kombination beider Chiffre (Uₐ,Sₐ) ermittelt werden können,
- bei dem vom Client der Anmeldungs-Chiffre (Sₐ) mit der Angabe einer Authorisierungsinstanz an einen Computer der Kontrollinstanz (Server) übermittelt wird,
- bei dem vom Server für ein Überprüfen der Identität des Benutzers der Anmeldungs-Chiffre (Sₐ) und eine Transfer-Benutzeridentifizierung (Trans-ID) an einen Computer der Authorisierungsinstanz übermittelt werden,
- bei dem vom Computer der Authorisierungsinstanz der Anmeldungs-Chiffre (Uₐ) vom Client angefordert wird,
- bei dem vom Client der Anmeldungs-Chiffre (Uₐ) an den Computer der Authorisierungsinstanz übermittelt wird,
- bei dem vom Computer der Authorisierungsinstanz der Anmeldungs-Chiffre (Uₐ) durch den Anmeldungs-Chiffre (Sₐ) entschlüsselt wird und die so entschlüsselten persönlichen Daten mit bei der Authorisierungsinstanz abgespeicherten Daten verglichen werden,
- bei dem vom Computer der Authorisierungsinstanz bei einem Übereinstimmen der Daten mindestens ein Hashcode (Hash1) von den entschlüsselten Daten erzeugt wird und zusammen mit der Transfer-Benutzeridentifizierung (Trans-ID) an den Server übermittelt wird,
- bei dem vom Server der mindestens eine Hashcode (Hash1) abgespeichert wird,
- bei dem vom Server eine Benutzeridentifizierung (UID) erzeugt und abgespeichert wird und
- bei dem vom Server die Benutzeridentifizierung (UID) an den Client übertragen wird.

9. Verfahren nach Anspruch 8,
bei dem vom Server mit der Benutzeridentifizierung (UID) ein Maskierungscode (Mask) erzeugt, abgespeichert und an den Client übermittelt wird.

10. Verfahren zum anonymen Zusichern von Eigenschaften eines Benutzers in einem Computernetzwerk,
- bei dem für ein erstes Anmelden eines Benutzers bei einer Kontrollinstanz eines der Verfahren nach Anspruch 8 oder 9 durchgeführt worden ist,
- bei dem vom Client des Benutzers mindestens ein Chiffrepaar (U,S) worden ist, wobei die Chiffre (U,S) jeweils die persönlichen Daten in unterschiedlicher Verschlüsselung enthalten und die persönlichen Daten nur aus der Kombination beider Chiffre (U,S) ermittelt werden können,
- bei dem vom Client die Benutzeridentifizierung (UID) und die Angabe der Kontrollinstanz an einen Computer eines Dritten übermittelt werden,
- bei dem vom Computer des Dritten für eine Identifizierungsanfrage die Benutzeridentifizierung (UID) an den Server der Kontrollinstanz übermittelt wird,
- bei dem vom Server der Client über die Identifizierungsanfrage des Computers des Dritten informiert wird,
- bei dem vom Client der Chiffre (S) an den Server übermittelt,
- bei dem vom Server der Chiffre (S) mit Hilfe des abgespeicherten Hashcodes (Hash1) überprüft,
- bei dem vom Server nach erfolgreicher Überprüfung der Chiffre (S) an den Computer des Dritten übermittelt wird,
- bei dem vom Client der dem Chiffre (S) zugeordnete Chiffre (U) an den Computer des Dritten übermittelt wird und
- bei dem vom Computer des Dritten der Chiffre (U) mit Hilfe des Chiffre (S) entschlüsselt wird und die Informationen aus dem Chiffre (U) abgeleitet werden.

11. Verfahren nach Anspruch 10,
bei dem vom Benutzer vor einem Übermitteln des Chiffre (U) an den Computer des Dritten festgelegt wird, welche der Mehrzahl von in den Chiffren (S) und (U) verschlüsselten Informationen vom Computer des Dritten entschlüsselt werden sollen.

12. Verfahren zum Überprüfen der Richtigkeit eines verschlüsselten Chiffreelementes (Sᵢ,Uᵢ), insbesondere für eine Verfahren nach Anspruch 4 oder 10,
- bei dem von einem Client und von einem Server der Kontrollinstanz ein aus den unverschlüsselten Daten erzeugter erster Hashcode (Hash1) verwendet wird,
- bei dem ein zweiter Hashcode (Hash2) aus den verschlüsselten Daten und dem ersten Hashcode (Hash1) erzeugt wird,
- bei dem das Chiffreelement (Sᵢ,Uᵢ) mit den verschlüsselten Daten und dem zweiten Hashcode (Hash2) erzeugt wird,
- bei dem zum Überprüfen der Richtigkeit der verschlüsselten Daten des Chiffreelements (Uᵢ,Sᵢ) der zweite Hashcode (Hash2) aus den übermittelten verschlüsselten Daten und dem abgespeicherten ersten Hashcode (Hash1) ermittelt und mit dem übermittelten zweiten Hashcode (Hash2) verglichen wird.

13. Verfahren nach Anspruch 12,
bei dem beim Erzeugen des zweiten Hashcode (Hash2) ein Maskierungscode (Mask) und/oder eine unverschlüsselte Angabe eines Attributes einbezogen wird.

14. Verfahren zum Erzeugen eines Chiffres (U) oder (S), insbesondere zum Durchführen eines Verfahrens nach einem der Ansprüche 1 bis 13, wobei ein erster aus den unverschlüsselten Daten erzeugter und abgespeicherter Hashcode (Hash1) vorgegeben ist,
- bei dem eine Kopfzeile erzeugt wird,
- bei dem mindestens ein Chiffreelement (Uᵢ) bzw. (Sᵢ), i=1..n, n≥1 aus einer unverschlüsselten Angabe eines Attributes, den verschlüsselten Daten (b₁) bzw. (b₂) des Datenfeldes (a) zu dem Attribut, einem Maskierungscode (Mask) und einem zweiten Hashcode (Hash2) erzeugt wird, wobei der zweite Hashcode (Hash2) aus den verschlüsselten Daten mindestens eines Datenfeldes und dem ersten Hashcode (Hash1) erzeugt wird, und
- bei dem eine Fußzeile mit einem den Zeitpunkt der Erzeugung des Chiffre (U) oder (S) charakterisierenden Datenfeld, einem Paritybit zur Identifizierung des Chiffretyps (U,S), dem Maskierungscode (Mask) und einem dritten Hashcode (Hash3) erzeugt wird, wobei der dritte Hashcode (Hash3) aus den ersten Hashcodes (Hash1) der einzelnen Chiffreelementen (Uᵢ) und (Sᵢ) erzeugt wird.

15. Verfahren nach Anspruch 14,
bei dem für mindestens ein Chiffreelement (Uᵢ) bzw. (Sᵢ) ein die Zuverlässigkeit der im Chiffreelement (Uᵢ) bzw. (Sᵢ) enthaltenen Daten charakterisierendes Verifizierungselement erzeugt wird.

16. Verfahren zum symmetrischen Verschlüsseln eines Datenfeldes (a) zu (b₁) und (b₂), insbesondere für ein Verschlüsseln von zwei Chiffreelementen (Uᵢ,Sᵢ) für ein Verfahren nach einem der Ansprüche 1 bis 15,
- bei dem die Feldlänge (L) des Datenfeldes (a) vorgegeben wird,
- bei dem eine Reihe von ganzen Pseudo-Zufallszahlen (Zⱼ) (Zⱼ, j=1..L) erzeugt wird, wobei die Pseudo-Zufallszahlen (Zⱼ) im Bereich 1..N liegen und jede Pseudo-Zufallszahl (Zⱼ) nur einmal vorkommt,
- bei dem jeder Pseudo-Zufallszahl (Zⱼ) als Attribut die Numerierung der Erzeugungsreihenfolge hinzugefügt und die Reihe (R₁: {Z₁, 1}, {Z₂,2}, ..., {Z_{L},L}) erzeugt wird,
- bei dem die Reihe (R₁: {Z₁,1}, {Z₂,2}, ..., {Z_{L},L}) nach der Größe der Pseudo-Zufallszahlen zur Reihe (R₂) sortiert wird,
- bei dem den Elementen {Zⱼ,j} der Reihe (R₂) die Zeichenwerte (aₖ,k=1..L) eines vorgegebenen Codes, vorzugsweise des ASCII-Codes, der Zeichen des zu kodierenden Datenfeldes (a) hinzugefügt werden und die Reihe (R₃: {Zⱼ,j,a_{k,j}}) erzeugt wird, wobei einem Leerzeichen der Zeichenwert (0) zugeordnet wird und wobei k=1..L die Numerierung der Zeichenreihenfolge innerhalb des Datenfeldes (a) kennzeichnet,
- bei dem die Elemente (a_{j,k}(1),a_{j,k}(2)) der Datenfelder (b₁,b₂) aus den Zeichenwerten (a_{k,j}) der Elemente {Zⱼ,j,a_{k,j}} der Reihe R₃ in Abhängigkeit von den ihnen zugeordneten Pseudo-Zufallszahlen (Zⱼ) und der Numerierung der Zeichenreihenfolge k=1..L nach den folgenden Regeln berechnet werden:
a) a_{k,j}(1) = a_{k,j} + Zⱼ/2 und
a_{k,j}(2) = a_{k,j} - Zⱼ/2
mit Zⱼ gerade und k beliebig,
b) a_{k,j}(1) = a_{k,j} + Zⱼ/2 + 0,5 und
a_{k,j}(2) = a_{k,j} - Zⱼ/2 + 0,5
mit bei Zⱼ ungerade und k gerade,
c) a_{k,j}(1) = a_{k,j} + Zⱼ/2 - 0,5 und
a_{k,j}(2) = a_{k,j} - Zⱼ/2 - 0,5
mit bei Zⱼ ungerade und k ungerade,
d) wenn a_{k,j}(1) > 255, dann a_{k,j}(1) = a_{k,j}(1) - 256 und
e) wenn a_{k,j}(2) < 0, dann a_{k,j}(2) = a_{k,j}(2) + 256,
- bei dem die Zeichenwerte a_{k,j}(1) und a_{k,j}(2) entsprechend der Reihenfolge j=1..L als Vektoren zu den verschlüsselten Datenfeldern
b₁ = (a_{k,1}(1), a_{k,2}(1), ..., a_{k,L}(1)) und
b₂ = (a_{k,1}(2), a_{k,2}(2), ..., a_{k,L}(2))
zusammengestellt werden.

17. Verfahren zum Entschlüsseln der nach dem Verfahren nach Anspruch 16 verschlüsselten Datenfelder
b₁ = (a_{k,1}(1), a_{k,2}(1), ..., a_{k,L}(1)) und
b₂ = (a_{k,1}(2), a_{k,2}(2), ..., a_{k,L}(2))
- bei dem die Differenzen (D_{k,j}) in der Reihenfolge j=1..L aus den Zeichenwerten a_{k,j}(1) und a_{k,j}(2) zu D_{k,j} = a_{k,j}(1) - a_{k,j}(2)
berechnet werden,
- bei dem dann, wenn D_{k,j} < 0 gilt, D_{k,j} = D_{k,j} + 256 berechnet wird,
- bei dem die Differenzen (D_{k,j}) nach aufsteigenden Werten sortiert werden, wobei dann die Reihenfolge k=1..L wieder hergestellt worden ist,
- bei dem die Zeichenwerte (a_{k,j}) nach den folgenden Regeln berechnet werden:
a) a_{k,j} = a_{k,j}(1) + D_{k,j}/2
mit D_{k,j} gerade,
b) a_{k,j} = a_{k,j}(1) + D_{k,j}/2 - 0,5
mit D_{k,j} ungerade und k gerade,
c) a_{k,j} = a_{k,j}(1) + D_{k,j}/2 + 0,5
mit D_{k,j} ungerade und k ungerade,
- bei dem den berechneten Zeichenwerten (a_{k,j}) entsprechend des verwendeten Codes die Zeichen ermittelt werden, die die entschlüsselten Daten des Datenfeldes (a) darstellen.

18. EDV-System zur Verwirklichung eines Verfahrens nach einem der Ansprüche 1 bis 17.

19. Computer-Programm mit Programmbefehlen für ein EDV-System zur Verwirklichung eines Verfahrens nach einem der Ansprüche 1 bis 17.

20. Computer-Programm nach Anspruch 19, gespeichert auf einem maschinenlesbaren Medium.
